# EUROPEAN PATENT SPECIFICATION

(11) **EP 2 907 183 B1**
(45) Date of publication and mention of the grant of the patent: **21.12.2016**
(21) Application number: 13737609.1
(22) Date of filing: 17.07.2013
(51) Int. Cl.: H01M 4/505, H01M 10/0525, H01M 10/0567, H01M 10/0568, H01M 10/0569, H01M 4/587

(54) **ELECTROCHEMICAL CELLS**
ELEKTROCHEMISCHE ZELLEN
CELLULES ÉLECTROCHIMIQUES

(30) Priority: 20.07.2012 EP 12177345
(43) Date of publication of application: 19.08.2015
(73) Proprietor: BASF SE, 67056 Ludwigshafen am Rhein (DE); University of Rhode Island, Kingston, RI 02881 (US)
(72) Inventor: GARSUCH, Arnd, 67063 Ludwigshafen (DE); CHESNEAU, Frederick Francois, 68789 St. Leon-Rot (DE); MALKOWSKY, Itamar Michael, 67346 Speyer (DE); LUCHT, Brett, Kingston, RI 02881 (US); XU, Mengqing, Kingston, RI 02881 (US); LU, Dongsheng, Kingston, RI 02881 (US)
(74) Representative: BASF IP Association
(86) International application number: PCT/EP2013/065106
(87) International publication number: WO 2014/012980

(56) References cited:
- EP-A1- 2 128 923
- EP-A1- 2 224 532
- EP-A2- 2 365 573
- WO-A1-2012/046514
- CN-A- 101 582 522
- CN-A- 102 064 344
- JP-A- 2007 134 245
- JP-A- 2011 034 698
- US-A1- 2011 183 213
- US-A1- 2012 141 883

## Description

The present invention relates to a lithium ion battery comprising
(i) at least one anode,
(ii) at least one cathode containing a cathode active material selected from lithium ion containing transition metal compounds having a content of Manganese of from 50 to 100 wt.-% based on the total weight of transition metal in the lithium ion containing transition metal compound, and
(iii) at least one electrolyte composition containing
   (A) at least one aprotic organic solvent,
   (B) 0.01 up to less than 5 wt.-% based on the total weight of the electrolyte composition of at least one compound selected from the group consisting of lithium (bisoxalato) borate, lithium difluoro (oxalato) borate, lithium tetrafluoro (oxalato) phosphate, lithium oxalate, lithium (malonato oxalato) borate, lithium (salicylato oxalato) borate, and lithium (tris oxalato) phosphate,
   (C) 0.01 up to less than 5 wt.-% based on the total weight of the electrolyte composition of at least one compound of general formula (IIa) or (IIb) 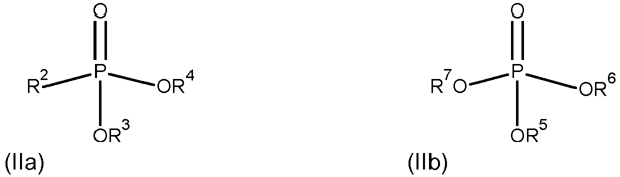 wherein
      R² is selected from H, C₁-C₁₀ alkyl, C₃-C₁₀ cycloalkyl, benzyl and C₆-C₁₄ aryl wherein alkyl, cycloalkyl, benzyl and aryl may be substituted by one or more F, C₁-C₄ alkyl, phenyl, benzyl or C₁-C₄ alkyl substituted by one or more F,
      R³, R⁴, R⁵, R⁶ and R⁷ may be same or different and are independently from each other selected from C₁-C₁₀ alkyl, C₃-C₁₀ cycloalkyl, benzyl and C₆-C₁₄ aryl wherein alkyl, cycloalkyl, benzyl and aryl may be substituted by one or more F, C₁-C₄ alkyl, phenyl, benzyl or C₁-C₄ alkyl substituted by one or more F,
   (D) at least one lithium salt different from compound (B), and
   (E) optionally at least one further additive.

The present invention further relates to the use of at least one compound selected from the group consisting of lithium (bisoxalato) borate, lithium difluoro (oxalato) borate, lithium tetrafluoro (oxalato) phosphate, lithium oxalate, lithium (malonato oxalato) borate, lithium (salicylato oxalato) borate, and lithium (tris oxalato) phosphate, in combination with at least one compound of general formula (IIa) or (IIb) as defined above, as additives in electrolytes of lithium ion batteries comprising a cathode active material selected from lithium ion containing transition metal compounds having a content of Manganese of from 50 to 100 wt.-% based on the total weight of the transition metal in the lithium ion containing transition metal compound, wherein compound (B) is used in a concentration range of from 0.01 up to less than 5 wt.-% and the compound (C) is used in a concentration range of from 0.01 up to less than 5 wt.-% based on the total weight of the electrolyte composition.

The term "compound (B)" denotes the compounds listed under (B) in the electrolyte composition, i.e. compound (B) denotes the group consisting of lithium (bisoxalato) borate, lithium difluoro (oxalato) borate, lithium tetrafluoro (oxalato) phosphate, lithium oxalate, lithium (malonato oxalato) borate, lithium (salicylato oxalato) borate, and lithium (tris oxalato) phosphate.

The term "compound (C)" denotes the compounds listed under (C) in the electrolyte composition, i.e. compound (C) denotes the group of compounds of general formula (IIa) or (IIb) as defined above.

Storing energy has long been a subject of growing interest. Electrochemical cells, for example batteries or accumulators, can serve to store electrical energy. As of recently, what are called lithium ion batteries have attracted particular interest. They are superior to the conventional batteries in several technical aspects. Lithium ion batteries are water sensitive. Water is therefore out of the question as a solvent for the lithium salts used in lithium ion batteries. Instead, organic carbonates, ethers and esters are used as sufficiently polar solvents. The literature accordingly recommends using water-free solvents for the electrolytes; see for example WO 2007/049888.

An important role is played by the materials from which the electrodes are made, and especially the material from which the cathode is made. Furthermore, the decomposition of the electrolyte or electrolyte components on the surface of the electrode materials (anode and cathode) is critical for the battery performance and battery cycle lifetime.

In many cases, lithium-containing mixed transition metal oxides are used as cathode active materials in lithium ion batteries, especially lithium-containing nickel-cobalt-manganese oxides with layer structure, or manganese-containing spinels which may be doped with one or more transition metals. These manganese-containing cathode active materials are promising due to their high operation voltage. However, a problem with many batteries remains that of cycling stability, which is still in need of improvement. Specifically in the case of those batteries which comprise a comparatively high proportion of manganese, for example in the case of electrochemical cells with a manganese-containing spinel electrode and a graphite anode, a severe loss of capacity is frequently observed within a relatively short time. In addition, it is possible to detect deposition of elemental manganese on the anode in cases where graphite anodes are selected as counter electrodes. It is believed that these manganese nuclei deposited on the anode, at a potential of less than 1V vs. Li/Li+, act as a catalyst for a reductive decomposition of the electrolyte. This is also thought to involve irreversible binding of lithium, as a result of which the lithium ion battery gradually loses capacity. Other transition metals contained in the cathode active material may be dissolved in the electrolyte during cycling the electrochemical cell analogously. These transition metals migrate towards the anode and are reduced and deposited on the anode due to the low potential. Even small amounts of such metal impurities may change the interface between electrolyte and anode and may lead to a reduced life time of the battery.

WO 2011/024149 discloses lithium ion batteries which comprise an alkali metal such as lithium between cathode and anode, which acts as a scavenger of unwanted by-products or impurities. Both in the course of production of secondary battery cells and in the course of later recycling of the spent cells, suitable safety precautions have to be taken due to the presence of highly reactive alkali metal.

Dalavi, S. et al., Journal of The Electrochemical Society 157 (2010), pages A1113 to A1120 describes the use of dimethyl methyl phosphonate as flame retardant for lithium ion batteries comprising as cathode active material LiNi_{0.8}Co_{0.2}O₂. This metal oxide has a comparatively low cell voltage in range of from 3.0 to 4.1 V.

US 2012/141883 A1 discloses an electrolyte for use in a lithium-ion battery comprising an anode and a high voltage cathode comprising a lithium manganese complex oxide, the electrolyte comprising a mixture of (i) a cyclic carbonate selected from the group consisting of ethylene carbonate (EC) and mono-fluoroethylene carbonate (FEC), (ii) ethyl methyl carbonate (EMC), (iii) a flame retardant additive consisting of a phosphonate or phosphate compound, (iv) a lithium salt, and (v) an electrolyte additive that improves compatibility and performance of the lithium-ion battery with a high voltage cathode, such as lithium bis(oxalato)borate (LiBOB) and/or vinylene carbonate (VC).

CN 101 582 522 A discloses the use of dimethyl methylphosphonate (DMMP) as flame retardant additive in electrolyte compositions for lithium-ion batteries comprising LiBOB as electrolyte salt.

EP 2 224 532 A1 describes flame retardant electrolyte solutions for rechargeable lithium batteries, which include at least one lithium salt, at least one linear carbonate-based solvent, at least one ammonium cation, at least one phosphoric acid-based solvent, and at least one additive including oxalatoborate.

It was thus an object of the present invention to provide means for reducing the dissolution of transition metal components like nickel and especially manganese from the cathode active material of lithium ion batteries and reducing the migration of transition metals from the cathode to the anode. It was further an object of the present invention to provide an electrolyte composition leading to an improved lifetime of lithium ion batteries comprising Manganese in the cathode active material, especially for high voltage Li ion batteries comprising Manganese in the cathode active material. Finally it was an object of the present invention to provide lithium ion batteries comprising Manganese in the cathode active material and having good performance characteristics.

This object is achieved by a lithium ion battery comprising
(i) at least one anode,
(ii) at least one cathode containing a cathode active material selected from lithium ion containing transition metal compounds having a content of Manganese of from 50 to 100 wt.-% based on the total weight of transition metal in the lithium ion containing transition metal compound, and
(iii) at least one electrolyte composition containing
   (A) at least one aprotic organic solvent,
   (B) 0.01 up to less than 5 wt.-% based on the total weight of the electrolyte composition of at least one compound selected from the group consisting of lithium (bisoxalato) borate, lithium difluoro (oxalato) borate, lithium tetrafluoro (oxalato) phosphate, lithium oxalate, lithium (malonato oxalato) borate, lithium (salicylato oxalato) borate, and lithium (tris oxalato) phosphate,
   (C) 0.01 up to less than 5 wt.-% based on the total weight of the electrolyte composition of at least one compound of general formula (IIa) or (IIb) 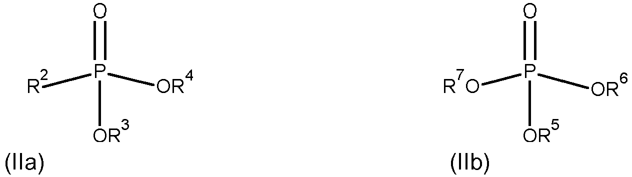 wherein
      R² is selected from H, C₁-C₁₀ alkyl, C₃-C₁₀ cycloalkyl, benzyl and C₆-C₁₄ aryl wherein alkyl, cycloalkyl, benzyl and aryl may be substituted by one or more F, C₁-C₄ alkyl, phenyl, benzyl or C₁-C₄ alkyl substituted by one or more F,
      R³, R⁴, R⁵, R⁶ and R⁷ may be same or different and are independently from each other selected from C₁-C₁₀ alkyl, C₃-C₁₀ cycloalkyl, benzyl and C₆-C₁₄ aryl wherein alkyl, cycloalkyl, benzyl and aryl may be substituted by one or more F, C₁-C₄ alkyl, phenyl, benzyl or C₁-C₄ alkyl substituted by one or more F,
   (D) at least one lithium salt different from compound (B), and
   (E) optionally at least one further additive,
   and by the use of at least one compound selected from the group consisting of lithium (bisoxalato) borate, lithium difluoro (oxalato) borate, lithium tetrafluoro (oxalato) phosphate, lithium oxalate, lithium (malonato oxalato) borate, lithium (salicylato oxalato) borate, and lithium (tris oxalato) phosphate, in combination with at least one compound of general formula (IIa) or (IIb) as defined above, as additives in electrolytes of lithium ion batteries comprising a cathode active material selected from lithium ion containing transition metal compounds having a content of Manganese of from 50 to 100 wt.-% based on the total weight of the transition metal in the lithium ion containing transition metal compound, wherein compound (B) is used in a concentration range of from 0.01 up to less than 5 wt.-%, preferably of from 0.08 to 4 wt.-% and most preferred of from 0.15 to 3 wt.-%, and compound (C) is used in a concentration range of from 0.01 up to less than 5 wt.-%, preferably of from 0.08 to 4 wt.-% and most preferred of from 0.15 to 3 wt.-%, based on the total weight of the electrolyte composition, respectively.

The addition of at least one compound of general formula (IIa) or (IIb) in combination with at least one compound selected from the group consisting of lithium (bisoxalato) borate, lithium difluoro (oxalato) borate, lithium tetrafluoro (oxalato) phosphate, lithium oxalate, lithium (malonato oxalato) borate, lithium (salicylato oxalato) borate, and lithium (tris oxalato) phosphate as additives in an electrolyte in the concentration ranges mentioned above reduces the dissolution of transition metal from cathode active materials containing transition metal compounds. Lithium ion batteries comprising the inventive electrolyte compositions have increased cycling stability.

The electrolyte composition (iii) of the inventive lithium ion battery is preferably liquid at working conditions; more preferred it is liquid at 1 bar and 25 °C, even more preferred the electrolyte composition is liquid at 1 bar and -15 °C.

The electrolyte composition (iii) contains at least one aprotic organic solvent (A), preferably at least two aprotic organic solvents (A) and more preferred at least three aprotic organic solvents (A). According to one embodiment the electrolyte composition may contain up to ten aprotic organic solvents (A).

The at least one aprotic organic solvent (A) is preferably selected from
(a) cyclic and noncyclic organic carbonates,
(b) di-C₁-C₁₀alkylethers
(c) di-C₁-C₄-alkyl-C₂-C₆-alkylene ethers and polyethers,
(d) cyclic ethers,
(e) cyclic and acyclic acetals and ketals,
(f) orthocarboxylic acids esters and
(g) cyclic and noncyclic esters of carboxylic acids.

More preferred the at least one aprotic organic solvent (A) is selected from cyclic and noncyclic organic carbonates (a), di-C₁-C₁₀-alkylethers (b), di-C₁-C₄-alkyl-C₂-C₆-alkylene ethers and polyethers (c) and cyclic und acyclic acetals and ketals (e), even more preferred the composition contains at least one aprotic organic solvent (A) selected from cyclic and noncyclic organic carbonates (a) and most preferred the composition contains at least two aprotic organic solvents (A) selected from cyclic and noncyclic organic carbonates (a).

Among the aforesaid aprotic organic solvents (A) such solvents and mixtures of solvents (A) are preferred which are liquid at 1 bar and 25 °C.

### Examples of suitable organic carbonates (a) are cyclic organic carbonates according to the general formula (IIIa), (IIIb) or (IIIc)

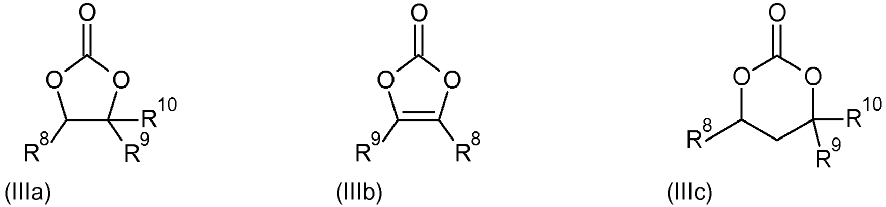

wherein
R⁸, R⁹ und R¹⁰ being different or equal and being independently from each other selected from hydrogen and C₁-C₄-alkyl, preferably methyl; F, and C₁-C₄-alkyl substituted by one or more F, e.g. CF₃.

"C₁-C₄-alkyl" is intended to include methyl, ethyl, n-propyl, iso-propyl, n-butyl, iso-butyl, sec.-butyl and tert.-butyl.

Preferred cyclic organic carbonates (a) are of general formula (IIIa), (IIIb) or (IIIc) wherein R⁸ and R⁹ are H. A further preferred cyclic organic carbonate (a) is difluoroethylencarbonate (IIId)

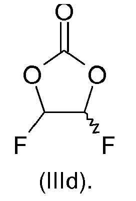

### Examples of suitable non-cyclic organic carbonates (a) are dimethyl carbonate, diethyl carbonate, methylethyl carbonate and mixtures thereof.

In one embodiment of the invention the electrolyte composition contains mixtures of non-cyclic oganic carbonates (a) and cyclic organic carbonates (a) at a ratio by weight of from 1:10 to 10:1, preferred of from 3:1 to 1:1.

### Examples of suitable non-cyclic di-C₁-C₁₀-alkylethers (b) are dimethylether, ethylmethylether, diethylether, diisopropylether, and di-n-butylether.

Examples of di-C₁-C₄-alkyl-C₂-C₆-alkylene ethers (c) are 1,2-dimethoxyethane, 1,2-diethoxyethane, diglyme (diethylene glycol dimethyl ether), triglyme (triethylenglycol dimethyl ether), tetraglyme (tetraethylenglycol dimethyl ether), and diethylenglycoldiethylether.

Examples of suitable polyethers (c) are polyalkylene glycols, preferably poly-C₁-C₄-alkylene glycols and especially polyethylene glycols. Polyethylene glycols may comprise up to 20 mol% of one or more C₁-C₄-alkylene glycols in copolymerized form. Polyalkylene glycols are preferably dimethyl- or diethyl-end capped polyalkylene glycols. The molecular weight M_{w} of suitable polyalkylene glycols and especially of suitable polyethylene glycols may be at least 400 g/mol. The molecular weight M_{w} of suitable polyalkylene glycols and especially of suitable polyethylene glycols may be up to 5 000 000 g/mol, preferably up to 2 000 000 g/mol. Examples of suitable cyclic ethers (d) are tetrahydrofurane and 1,4-dioxane.

Examples of suitable non-cyclic acetals (e) are 1,1-dimethoxymethane and 1,1-diethoxymethane. Examples for suitable cyclic acetals (e) are 1,3-dioxane and 1,3-dioxolane. Examples of suitable orthocarboxylic acids esters (f) are tri-C₁-C₄ alkoxy methane, in particular trimethoxymethane and triethoxymethane.

Examples for suitable noncyclic esters of carboxylic acids (g) are ethyl acetate, methyl butanoate, esters of dicarboxylic acids like 1,3-dimethyl propanedioate. An example of a suitable cyclic ester of carboxylic acids (lactones) is γ-butyrolactone.

The electrolyte composition (iii) of the inventive Li ion battery further contains 0.01 up to less than 5 wt.-%, preferably 0.08 to 4 wt.-% and most preferred 0.015 to 3 wt.-%, based on the total weight of the electrolyte composition (iii), of at least one compound (B) selected from the group consisting of lithium (bisoxalato) borate (LiBOB), lithium difluoro (oxalato) borate (LiDFOB), lithium tetrafluoro (oxalato) phosphate, lithium oxalate, lithium (malonato oxalato) borate, lithium (salicylato oxalato) borate, and lithium (tris oxalato) phosphate.

Preferably the electrolyte composition (iii) contains at least one compound (B) selected from the group consisting of lithium (bisoxalato) borate, lithium tetrafluoro (oxalato) phosphate, lithium oxalate, and lithium difluoro (oxalato) borate. According to one embodiment, the inventive composition contains lithium (bisoxalato) borate. According to a further embodiment the electrolyte composition contains lithium difluoro (oxalato) borate. According to another embodiment the electrolyte composition contains lithium tetrafluoro (oxalato) phosphate. According to a further embodiment the electrolyte composition contains lithium oxalate. Furthermore, the electrolyte composition (iii) of the inventive Li ion battery contains 0.01 up to less than 5 wt.-%, preferably 0.08 to 4 wt.-% and most preferred 0.015 to 3 wt.-%, based on the total weight of the electrolyte composition (iii), of at least one compound (C) of general formula (IIa) or (IIb) 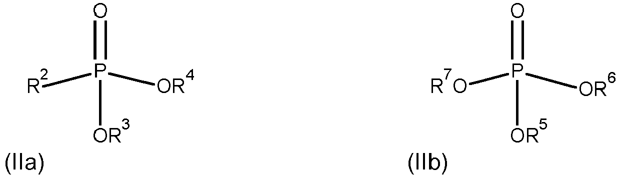 wherein
R² is selected from H, C₁-C₁₀ alkyl, C₃-C₁₀ cycloalkyl, benzyl and C₆-C₁₄ aryl wherein alkyl, cycloalkyl, benzyl and aryl may be substituted by one or more F, C₁-C₄ alkyl, benzyl, phenyl, or C₁-C₄ alkyl substituted by one or more F,
R³, R⁴, R⁵, R⁶ and R⁷ may be same or different and are independently from each other selected from C₁-C₁₀ alkyl, C₃-C₁₀ cycloalkyl, benzyl and C₆-C₁₄ aryl wherein alkyl, cycloalkyl, benzyl and aryl may be substituted by one or more F, C₁-C₄ alkyl, phenyl, benzyl or C₁-C₄ alkyl substituted by one or more F,

Examples of C₁-C₁₀-alkyl include methyl, ethyl, n-propyl, iso-propyl, n-butyl, iso-butyl, sec.-butyl, tert.-butyl, n-pentyl, iso-pentyl, n-hexyl, iso-hexyl, sec.-hexyl, 2-ethylhexyl, n-octyl, n-nonyl and n-decyl, preferred are methyl, ethyl, n-propyl, iso-propyl, n-butyl, iso-butyl, sec.-butyl, tert.-butyl, in particular preferred are methyl and ethyl.

Examples of C₃-C₁₀ cycloalkyl are cyclopropyl, cyclobutyl, cyclopentyl, cyclohexyl, cycloheptyl, cyclooctyl, cyclononyl and cyclodecyl, preferred are cyclopentyl, cyclohexyl, cycloheptyl. Examples of C₆-C₁₄ aryl are phenyl, 1-naphtyl, 2-naphtyl, 1-anthryl, 2-anthryl, 2-anthryl, 1-phenanthryl, 2-phenanthryl, 3-phenanthryl, 4-phenanthryl and 9-phenanthryl, preferred are phenyl, 1-naphtyl and 2-naphtyl, in particular preferred is phenyl. "Benzyl" means the substituent -CH₂-C₆H₆.

Examples of "C₁-C₄ alkyl substituted by one or more F" are -CH₂F, -CHF₂, -CF₃ and -C₃H₆CF₃.

Preferred compounds (C) are compounds of general formula (IIa) and (IIb) wherein R² is selected from H, C₁-C₆ alkyl, benzyl and phenyl wherein alkyl, benzyl and phenyl may be substituted by one or more F, C₁-C₄ alkyl, benzyl, phenyl, or C₁-C₄ alkyl substituted by one or more F, and R³, R⁴, R⁵, R⁶ and R⁷ may be same or different and are independently from each other selected from C₁-C₆ alkyl, benzyl and phenyl wherein alkyl, benzyl and phenyl may be substituted by one or more F, C₁-C₄ alkyl, benzyl, phenyl, or C₁-C₄ alkyl substituted by one or more F.

More preferred are compounds of formula (IIa) wherein R² is selected from H and C₁-C₆ alkyl, and R³ and R⁴ may be same or different and are independently from each other selected from C₁-C₆ alkyl, even more preferred R² is selected from H and C₁-C₄ alkyl and R² and R³ are independently from each other selected from C₁-C₄ alkyl.

In particular preferred are dimethyl methyl phosphonate, diethyl ethyl phosphonate, dimethyl ethyl phosphonate (R² is ethyl and R³ and R⁴ are methyl), and diethyl methyl phosphonate (R² is methyl and R³ and R⁴ are ethyl).

The addition of a combination of at least one compound (B) and at least one compound (C) to an electrolyte in lithium ion batteries comprising a Manganese containing transition metal compound as cathode active material has shown to reduce the amount of Manganese and further transition metal present in the cathode active material dissolved from cathodes containing transition metals and to enhance the performance of the electrolyte. Hence, another object of the present invention is the use of at least one compound (B) as defined above in combination with at least one compound (C) as defined above as additives in electrolytes for lithium ion batteries comprising at least one cathode containing a cathode active material selected from lithium ion containing transition metal compounds having a content of Manganese of from 50 to 100 wt.-% based on the total weight of transition metal in the lithium ion containing transition metal compound, preferably having a content of Manganese of from 50 to 80 wt.-%, based on the total weight of the transition metal.

Preferred combinations of compounds (B) and (C) for use as additives in electrolytes for the inventive lithium ion batteries and comprised in the electrolyte compositions (iii) are the combinations of lithium (bisoxalato) borate, vinylenecarbonate and/or lithium difluoro (oxalato) borate with compounds of formula (IIa) wherein R² is selected from H and C₁-C₆ alkyl, and R³ and R⁴ may be same or different and are independently from each other selected from C₁-C₆ alkyl, even more preferred with compounds of formula (IIa) wherein R² is selected from H and C₁-C₄ alkyl and R³ and R⁴ are independently from each other selected from C₁-C₄ alkyl. Most preferred are the combinations of lithium (bisoxalato) borate, vinylenecarbonate, and/or lithium difluoro (oxalato) borate with one or more compounds selected from the group consisting of dimethyl methyl phosphonate, diethyl ethyl phosphonate, dimethyl ethyl phosphonate, and diethyl methyl phosphonate, and in particular the combination of lithium (bisoxalato) borate and dimethyl methyl phosphonate, the combination of vinylenecarbonate and dimethyl methylphosphonate, and the combination of lithium difluoro (oxalato) borate and dimethyl methyl phosphonate. Inventive lithium ion batteries comprising electrolyte compositions (iii) containing the aforementioned combinations of compounds (B) and (C) are preferred, too.

The electrolyte composition (iii) further contains at least one lithium salt (D) different from compounds (B). Preferably the lithium salt (D) is a monovalent salt, i.e. a salt with monovalent anions. The lithium salt (D) may be selected from the group consisting of LiPF₆, LiPF₃(CF₂CF₃)₃, LiClO₄, LiAsF₆, LiBF₄, LiCF₃SO₃, LiN(SO₂F)₂, Li₂SiF₆, LiSbF₆, LiAlCl₄, and salts of the general formula (CₙF₂ₙ₊₁SO₂)ₘXLi, where m and n are defined as follows:
m = 1 when X is selected from oxygen and sulfur,
m = 2 when X is selected from nitrogen and phosphorus,
m = 3 when X is selected from carbon and silicon, and
n is an integer in the range from 1 to 20,
like LiC(CₙF₂ₙ₊₁SO₂)₃ wherein n is an integer in the range from 1 to 20, and lithium imides such as LiN(CₙF₂ₙ₊₁SO₂)₂, where n is an integer in the range from 1 to 20.

Preferably the lithium salt (D) is selected from LiPF₆, LiBF₄, and LiPF₃(CF₂CF₃)₃, and more preferred the lithium salt (D) is selected from LiPF₆ and LiBF₄, the most preferred lithium salt (D) is LiPF₆.

The at least one lithium salt (D) different from compounds (B) is usually present at a minimum concentration of at least 0.01 wt.-%, preferably of at least 1 wt.-%, and more preferred of at least 5 wt.-%, based on the total weight of the electrolyte composition.

Moreover, the inventive electrolyte composition may contain at least one further additive (E). The further additive (E) is selected from additives for electrolytes different from compounds (A), (B), (C) and (D). Examples for the further additive (E) are 2- and 4-vinylpyrridine, cyclic exo-methylene carbonates, sultones, organic esters of inorganic acids, cyclic and acyclic alkanes having at a pressure of 1 bar a boiling point of at least 36°C and aromatic compounds.

Examples of suitable aromatic compounds are biphenyl, cyclohexylbenzene and 1,4-dimethoxy benzene.

Sultones may be substituted or unsubstituted. Examples for suitable sultones are butane sultone and propylene sultone (IV) as shown below:

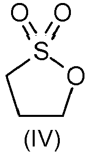

Examples for suitable cyclic exo-methylene carbonates are compound of formula (V) 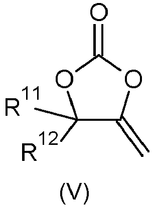 wherein R¹¹ and R¹² may be same or different and are independently from each other selected from C₁-C₁₀ alkyl, and hydrogen. Preferably both R⁸ and R⁹ are methyl. Also preferred both R⁸ and R⁹ are hydrogen. A preferred cyclic exo-methylene carbonate is methylenethylene carbonate.

Furthermore, additive (E) may be selected from acyclic or cyclic alkanes, preferably alkanes having at a pressure of 1 bar a boiling point of at least 36°C. Examples of such alkanes are cyclohexane, cycloheptane und cyclododecane.

Further compounds suitable as additives (E) are organic ester of inorganic acids like ethyl ester or methyl ester of phosphoric acid or sulfuric acid.

According to one embodiment of the present invention the electrolyte composition contains at least one further additive (E). If at least one further additive (E) is present, its minimum concentration is usually at least 0.01 wt.-% based on the total weight of the electrolyte composition.

The inventive electrolyte composition preferably is substantially free from water, i.e. the electrolyte composition preferably contains from 0 up to 50 ppm of water, more preferred from 3 to 30 ppm of water and in particular of from 5 to 25 ppm of water. The term "ppm" denotes parts per million based on the weight of the total electrolyte composition.

Various methods are known to the person skilled in the art to determine the amount of water present in the electrolyte composition. A method well suited is the titration according to Karl Fischer, e.g. described in detail in DIN 51777 or ISO760: 1978. "0 ppm water" shall mean, that the amount of water is below the detection limit.

According to one embodiment of the present invention the electrolyte composition contains no components other than the at least one aprotic organic solvent (A), the at least one compound (B), the at least one compound (C), optionally the at least one lithium salt (D), optionally the at least one further additive (E) and 0 to 50 ppm water.

In a preferred embodiment of the present invention the electrolyte composition contains at least two aprotic solvents (A) selected from cyclic and noncyclic organic carbonates (a), at least one compound (B) selected from lithium (bisoxalato) borate, and lithium difluoro (oxalato) borate, and vinylenecarbonate, at least one compound (C) selected from dimethyl methyl phosphonate and at least one lithium salt (D) selected from LiBF₄ and LiPF₆.

According to a preferred embodiment of the Li ion batteries the electrolyte composition (iii) contains 0.08 to 4 wt.-% of at least one compound (B), and 0.08 to 4 wt.-% of at least one compound (C), more preferred 0.15 to 3 wt.-% of at least one compound (B), and 0.15 to 3 wt.-% of at least one compound (C), based on the weight of the total composition. Electrolytes containing such small amounts of compounds (C) in combination with small amounts of compounds (B) show a beneficial effect on the capacity retention of the Li ion batteries containing said electrolyte composition.

Preference is further given to inventive Li ion batteries comprising electrolyte compositions (iii) containing
from 55 to 99.5 wt.-%, preferred from 60 to 95 wt.-% and more preferred from 70 to 90 wt.-% of at least one aprotic organic solvent (A),
from 0.01 up to less than 5 wt.-%, preferred from 0.08 to 4 wt.-%, and more preferred from 0.15 to 3 wt.-% of at least one compound (B)
from 0.01 up to less than 5 wt.-%, preferred from 0.08 to 4 wt.-%, and more preferred from 0.15 to 3 wt.-% of at least one compound (C),
from 5 to 25 wt.-%, preferred from 5 to 22 wt.-%, and more preferred from 5 to 18 wt.-% of at least one lithium salt (D)
from 0 to 10 wt.-%, preferred from 0.01 to 10 wt.-%, and more preferred from 0.4 to 6 wt.-% of at least one further additive (E) and
from 0 to 50 ppm, preferred from 3 to 30 ppm, and more preferred from 5 to 25 ppm of water,
based on the weight of the total composition.

The inventive Li ion batteries comprising electrolyte compositions (iii) as described above show increased cycling stability.

In the context of the present invention the term "lithium ion battery" means a rechargeable electrochemical cell wherein during discharge lithium ions move from the negative electrode (anode) to the positive electrode (cathode) and during charge the lithium ions move from the positive electrode to the negative electrode, i.e. the charge transfer is performed by lithium ions. Usually lithium ion batteries comprise a cathode containing as cathode active material a lithium ion-containing transition metal compound, for example transition metal oxide compounds with layer structure like LiCoO₂, LiNiO₂, and LiMnO₂, or transition metal phosphates having olivine structure like LiFePO₄ and LiMnPO₄, or lithium-manganese spinels which are known to the person skilled in the art in lithium ion battery technology.

The term "cathode active material" denotes the electrochemically active material in the cathode, e.g. the transition metal oxide intercalating/deintercalating the lithium ions during charge/discharge of the battery. Depending on the state of the battery, i.e. charged or discharged, the cathode active material contains more or less lithium ions. The term "anode active material" denotes the electrochemically active material in the anode, e.g. carbon intercalating/deintercalating the lithium ions during charge/discharge of the battery.

According to the present invention the lithium ion batteries comprise a cathode containing a cathode active material selected from lithium ion containing transition compounds having a content of Manganese of from 50 to 100 wt.-%, based on the total weight of transition metal in the lithium ion containing transition metal compound and preferably having a content of Manganese of from 50 to 80 wt.-%. The lithium ion containing transition metal compounds may contain only manganese as transition metal, but may contain manganese and at least one further transition metal or even at least two or three further transition metals.

Lithium ion-containing transition metal oxides containing manganese as the transition metal are understood in the context of the present invention to mean not only those oxides which have at least one transition metal in cationic form, but also those which have at least two transition metal oxides in cationic form. In addition, in the context of the present invention, the term "lithium ion-containing transition metal oxides" also comprises those compounds which - as well as lithium - comprise at least one non-transition metal in cationic form, for example aluminum or calcium.

In a particular embodiment, manganese may occur in cathode in the formal oxidation state of +4. Manganese in cathode more preferably occurs in a formal oxidation state in the range from +3.5 to +4.

According to one embodiment of the present invention the lithium ion batteries have a cell voltage of more than 4.2 V against the anode when fully charged, preferred of at least 4.3 V, more preferred of at least 4.4 V, even more preferred of at least 4.5, most preferred of at least 4.6 V and in particular of at least 4.7 V against the anode when fully charged.

Many elements are ubiquitous. For example, sodium, potassium and chloride are detectable in certain very small proportions in virtually all inorganic materials. In the context of the present invention, proportions of less than 0.1 % by weight of cations or anions are disregarded. Any lithium ion-containing mixed transition metal oxide comprising less than 0.1 % by weight of sodium is thus considered to be sodium-free in the context of the present invention. Correspondingly, any lithium ion-containing mixed transition metal oxide comprising less than 0.1 % by weight of sulfate ions is considered to be sulfate-free in the context of the present invention.

In one embodiment of the present invention, lithium ion-containing transition metal compound is selected from manganese-containing lithium iron phosphates, from manganese-containing spinels and manganese-containing transition metal oxides with layer structure, preferred are manganese-containing spinels and manganese-containing transition metal oxides with layer structure. The manganese-containing transition metal oxides with layer structure may be mixed transition metal oxides comprising not only manganese but at least one further transition metal.

In one embodiment of the present invention, lithium ion-containing transition metal compound is selected from those compounds having a superstoichiometric proportion of lithium.

In one embodiment of the present invention, the lithium ion-containing transition metal compound is selected from manganese-containing spinels of the general formula (VI)

Li₁₊ₜM₂₋ₜO_{4-d} (VI)

wherein
d is 0 to 0.4,
t is 0 to 0,4, and
M is Mn and at least one further transition metal selected from the group consisiting of Co and Ni,preferred are combinations of Ni and Mn; or
the lithium ion-containing transition metal compound is selected from manganese containing transition metal oxides with layer structure of general formula (VII)

Li_{(1+y)}[NiₐCo_{b}Mn_{c}]_{(1-y})O₂ (VII)

wherein
y is 0 to 0.3, preferably 0.05 to 0.2, and
a, b and c may be same or different and are independently 0 to 0.8 with a + b + c = 1.

In one embodiment of the present invention, manganese-containing transition metal oxides with layer structure are selected from those in which [NiₐCo_{b}Mn_{c}] is selected from Ni_{0.33}Co_{0.33}Mn_{0.33}, Ni_{0.5}Co_{0.2}Mn_{0.3}, Ni_{0.4}Co_{0.3}Mn_{0.4}, Ni_{0.4}Co_{0.2}Mn_{0.4} and Ni_{0.45}Co_{0.10}Mn_{0.45}.

The cathode may comprise one or more further constituents. For example, the cathode may comprise carbon in a conductive polymorph, for example selected from graphite, carbon black, carbon nanotubes, graphene or mixtures of at least two of the aforementioned substances. In addition, the cathode may comprise one or more binders, for example one or more organic polymers like polyethylene, polyacrylonitrile, polybutadiene, polypropylene, polystyrene, polyacrylates, polyisoprene and copolymers of at least two comonomers selected from ethylene, propylene, styrene, (meth)acrylonitrile and 1,3-butadiene, especially styrenebutadiene copolymers, polyvinylidene fluoride (PVdF), polytetrafluoroethylene, copolymers of tetrafluoroethylene and hexafluoropropylene, copolymers of tetrafluoroethylene and vinylidene fluoride and polyacrylnitrile
Inventive Li ion batteries further comprise at least one anode. In one embodiment of the present invention, the anode contains Li ion intercalating carbon as anode active material. Lithium ion intercalating carbon is known to the person skilled in the art, for example carbon black, so called hard carbon, which means carbon similar to graphite having larger amorphous regions than present in graphite, and graphite, preferred the anode contains graphite, more preferred the anode active material consists essentially of graphite and in particular the anode consists essentially of graphite. The anode may contain further components like binder which may be selected from the binders described above for the cathode.

The inventive lithium ion batteries may contain further constituents customary per se, for example output conductors, separators, housings, cable connections etc. Output conductors may be configured in the form of a metal wire, metal grid, metal mesh, expanded, metal, metal sheet or metal foil. Suitable metal foils are especially aluminum foils. The housing may be of any shape, for example cuboidal or in the shape of a cylinder. In another embodiment, inventive electrochemical cells have the shape of a prism. In one variant, the housing used is a metal-plastic composite film processed as a pouch.

Inventive lithium ion batteries give a high voltage of up to approx. 4.8 V and are notable for high energy density and good stability. More particularly, inventive lithium ion batteries are notable for only a very small loss of capacity in the course of repeated cycling. Several inventive lithium ion batteries may be combined with one another, for example in series connection or in parallel connection. Series connection is preferred. The present invention further provides for the use of inventive lithium ion batteries as described above in automobiles, bicycles operated by electric motor, aircraft, ships or stationary energy stores.

The present invention therefore also further provides for the use of inventive lithium ion batteries in devices, especially in mobile devices. Examples of mobile devices are vehicles, for example automobiles, bicycles, aircraft, or water vehicles such as boats or ships. Other examples of mobile devices are those which are portable, for example computers, especially laptops, telephones or electrical power tools, for example from the construction sector, especially drills, battery-driven screwdrivers or battery-driven tackers.

The present invention also further provides a process for producing an inventive lithium ion battery as described above, comprising
(α) providing at least one aprotic organic solvent or a mixture of aprotic organic solvents (A),
(β) optionally adding one or more further additives (E) and mixing,
(γ) drying,
(δ) adding the at least one compound (B), the at least one compound (C) and the at least one lithium salt (D) and mixing, and
(ε) providing at least one anode and at least one cathode and assembling the lithium ion battery.

Steps (β) to (δ) may be performed in the order described above, but it is also possible to carry out step (γ) before step (β).

The aprotic organic solvent or a mixture of aprotic organic solvents (A) is provided in step (α). The solvent or mixture of solvents (A) may be provided in a dry state, e.g. with a content of water of from 1 to 50 ppm water, based on the weight of (A) or (A) may be provided with a higher content of water. Preferably the aprotic organic solvent or mixture of aprotic organic solvents (A) is provided in liquid form, e.g. when using ethylenecarbonate having a melting point of about 36 °C one or more further solvent (A) like diethylcarbonate and/or methylethylcarbonate are added to obtain a liquid mixture of aprotic organic solvents (A). By addition of diethylcarbonate or methylethylcarbonate the melting point may be lowered. The ratio of different solvents in a mixture of aprotic organic solvents (A) is preferably selected to obtain a mixture being liquid at 0 °C and above. More preferred the ratio of different solvents in a mixture of aprotic organic solvents (A) is selected to obtain a mixture being liquid at -15 °C and above. Whether an aprotic organic solvent or a mixture of aprotic organic solvents (A) is liquid may be determined by visual inspection.

According to one embodiment of the present invention the mixing in steps (β) and (δ) is carried out at temperatures from 10 to 100 °C, preferably at room temperature, e.g. at 20 to 30 °C. According to another embodiment of the present invention the mixing in steps (β) and (δ) is preferably carried out at a temperature being at least 1 °C above the melting point of that solvent (A) having the highest melting point of all solvents (A) used in the electrolyte composition. The limit of the temperature for mixing is determined by the volatility of that solvent (A) being the most volatile solvent (A) used in the electrolyte composition. Preferably the mixing is performed below the boiling point of the most volatile solvent (A) used in the electrolyte composition.

Mixing is carried out usually under anhydrous conditions, e.g. under inert gas atmosphere or under dried air, preferred mixing is carried out under dried nitrogen atmosphere or dried noble gas atmosphere.

In step (γ) drying is carried out, e.g. by drying the at least one aprotic organic solvent (A) or the at least one mixture of aprotic organic solvents (A) or the mixture obtained so far over at least one ion exchanger or preferably molecular sieve and separating the dried solvent/solvent mixture from ion exchanger or molecular sieve. It is also possible to dry each solvent (A) individually before providing the at least one aprotic organic solvent (A) or the at least one mixture of aprotic organic solvents (A) in step (α), i.e. performing step (γ) before step (α). One embodiment of the present invention comprises performing step (γ) at a temperature in the range from 4 to 100°C, preferably in the range from 15 to 40°C and more preferably in the range from 20 to 30°C. In one embodiment of the present invention, the time for which ion exchanger or molecular sieve is allowed to act on the solvent mixture is in the range from a few minutes, for example at least 5 minutes, to several days, preferably not more than 24 hours and more preferably in the range from one to 6 hours.
It is preferred to carry out step (γ) before adding any lithium containing compound, e.g. compound (B) or lithium salt (D).

In step (ε) at least one anode and at least one cathode are provided and the lithium ion battery is assembled. This includes the addition of the electrolyte composition (iii). The assembling of lithium ion batteries is known to the skilled person.

The invention is illustrated by the examples which follow, which do not, however, restrict the invention.

### A) Electrolyte compositions:

### Comparative electrolyte composition 1 (CEC 1):

Battery grade solvents ethylene carbonate (EC) and ethyl-(methyl)-carbonate (EMC) were used as solvents (A) at a volume ratio of 3:7. As lithium salt (D) battery grade hexafluorophosphate (LiPF₆) was used at a concentration of 1.0 M.

### Comparative electrolyte composition 2 (CEC 2):

Lithium bis(oxalato) borate (LiBOB) was purchased from Chemetall. To electrolyte CEC 1 (1.0 M LiPF₆ EC/EMC (3/7, v/v)) 0.5 wt.-% LiBOB, and 1 wt.-% vinylene carbonate (VC) were added.

### Comparative electrolyte composition 3 (CEC 3):

Dimethyl methylphosphonate (DMMP) was distilled and soaked with 4Å molecule seizes before use. 1 wt.-% of DMMP was added to the electrolyte composition CEC 1.

### Comparative electrolyte composition 4 (CEC 4):

Lithium bis(oxalato) borate (LiBOB) was purchased from Chemetall. 0.5 wt.-% of LiBOB was added to the electrolyte composition CEC 1.

### Inventive electrolyte composition 1 (IEC 1):

Dimethyl methylphosphonate (DMMP) was distilled and soaked with 4Å molecule seizes before use. DMMP and LiBOB were added to electrolyte CEC 1 (1.0 M LiPF₆ EC/EMC (3/7, v/v)) yielding an inventive electrolyte composition containing 1 wt.-% of DMMP and 0.5 wt.-% LiBOB.

### Reference electrolyte composition 2 (IEC 2):(not according to the invention)

Dimethyl methylphosphonate (DMMP) was distilled and soaked with 4̌ molecule seizes before use. Vinylenecarbonate (VC) and DMMP were added to electrolyte CEC 1 (1.0 M LiPF₆ EC/EMC (3/7, v/v)) yielding concentrations of 0.5 wt.-% VC and 1 wt.-% DMMP.

### Inventive electrolyte composition 3 (IEC 3):

IEC 3 was prepared as IEC-1 with the difference that lithium difluoro oxalato borate (LiDFOB) was used instead of LiBOB.

**Table 1: Concentration of additives in the electrolyte compositions of the examples**

| Electrolyte composition | LiBOB [wt.-%] | VC [wt.-%] | DMMP [wt.-%] | LiDFOB [wt.-%] |
|---|---|---|---|---|
| CEC 1 | | | | |
| CEC 2 | 0.5 | 1 | | |
| CEC 3 | | | 1 | |
| CEC 4 | 0.5 | | | |
| IEC 1 | 0.5 | | 1 | |
| IEC 2_{*} | | 0.5 | 1 | |
| IEC 3 | | | 1 | 0.5 |

| | | | | |
|---|---|---|---|---|
| wt.-%: based on the total weight of the electrolyte composition * : not according to the invention | | | | |

### B) Dissolution of transition metal from LiNi_{0.5}Mn_{1.5}O₄

LiNi_{0.5}Mn_{1.5}O₄ powder was provided by BASF. The samples for thermal storage were prepared in a high purity argon filled glove-box. The vials were charged with 0.1 g LiNi_{0.5}Mn_{1.5}O₄ powder followed by addition of 2 mL CEC1 and IEC 1, respectively. The vials were flame sealed under reduced pressure. Care was given to avoid contamination of the vial walls near the sealing point. The sealed samples were stored at 55 °C for 2 weeks. Samples were weighted before and after thermal storage to confirm seal. After thermal storage, vials were opened in an argon filled glove-box. The solid LiNi_{0.5}Mn_{1.5}O₄ samples were separated from the respective electrolyte and then washed with dimethyl carbonate (DMC) three times followed by drying in vacuum. The residual electrolyte solutions were analyzed by ICP-MS (inductively-coupled-plasma mass-spectrometry) to determine the content of Mn and Ni. The results are shown in table 2.

**Table 2: Mn and Ni dissolution after thermal storage at 55°C for 2 weeks**

| Electrolyte composition | Mn leaching (wt.-%) | Ni leaching (wt.-%) |
|---|---|---|
| CEC 1 | 0.613 | 0.016 |
| IEC 1 | 0.311 | 0.012 |

| | | |
|---|---|---|
| Mn/Ni leaching (wt.-%): Concentration of Mn/Ni in the electrolyte composition based on the total weight of the electrolyte | | |

### C) Cycling performance

The cathode electrode was composed of 89% LiNi_{0.5}Mn_{1.5}O₄, 6% conductive carbon, and 5% PVDF. 2032-type coin cells were assembled with a graphite anode, the LiNi_{0.5}Mn_{1.5}O₄ cathode, and a Celgard 2325 separator. Each cell contained 30 µL electrolyte composition. The cells were cycled with a constant current-constant voltage charge and constant current discharge between 3.5 to 4.9 V with Arbin BT2000 cycler according to following protocol: 1 st cycle at C/20; 2nd and 3rd cycles at C/10; remaining cycles at C/5. 50 cycles were performed at room temperature, followed by 20 cycles at 55 °C. All cells were produced in triplicate and representative data is provided. The results are shown in table 3

**Table 3: Specific cycling data of selected cycles of LiNi_{0.5}Mn_{1.5}O₄/graphite cells with and without additives at room temperature (16 °C) and at 55 °C.**

| RT | CEC 1 | CEC 2 (LiBOB+VC) | IEC 1 (LiBOB+DMMP) | IEC 2 _{*} (VC+DMMP) | IEC 3 (LiDFOB+DMMP) |
|---|---|---|---|---|---|
| 1 st (mAh/g) | 119.3 | 120.1 | 120.1 | 125.3 | 127.5 |
| 50th (mAh/g) | 99.3 | 97.2 | 108.6 | 109.4 | 111.2 |
| capacity retention | 83.2% | 80.9% | 90.4% | 87.3% | 87.2% |
| 55 °C | | | | | |
| 1 st (mAh/g) | 77.8 | 73.8 | 98.7 | 92.3 | 93.3 |
| 20th (mAh/g) | 21.9 | 48.6 | 44.8 | 53.9 | 48.6 |
| capacity retention | 28.1% | 64.4% | 45.4% | 58.4% | 52.1% |

| | | | | | |
|---|---|---|---|---|---|
| * : not according to the invention | | | | | |

At room temperature the cells with inventive electrolyte compositions showed better cycling performance, discharge capacity and coulombic efficiency than cells comprising comparative electrolytes.

In table 4 the cycling performance of cells with CEC 1, CEC 3, CEC 4 and IEC1 at room temperature are shown. The cycling protocol was the same as described above.

**Table 4: Specific cycling data of selected cycles of LiNi_{0.5}Mn_{1.5}O₄/graphite cells with and without additives at room temperature.**

| RT | CEC 1 | CEC 3 (DMMP) | CEC 4 (LiBOB) | IEC 1 (LiBOB+DMMP) |
|---|---|---|---|---|
| 1 st (mAh/g) | 143.6 | 126.3 | 126.8 | 114.7 |
| 15th (mAh/g) | 132.8 | 123.7 | 118.2 | 117.3 |
| capacity retention | 92.4% | 97.9% | 93.2% | 102.3% |

As can be seen in table 4, the inventive combination of LiBOB and DMMP shows higher capacity retention than the electrolyte composition without additives and than the electrolyte compositions containing only one of the respective additives at room temperature.

## Claims

1. A lithium ion battery comprising
(i) at least one anode,
(ii) at least one cathode containing a cathode active material selected from lithium ion containing transition metal compounds having a content of Manganese of from 50 to 100 wt.-% based on the total weight of transition metal in the lithium ion containing transition metal compound, and
(iii) at least one electrolyte composition containing
(A) at least one aprotic organic solvent,
(B) 0.01 up to less than 5 wt.-% based on the total weight of the electrolyte composition of at least one compound selected from the group consisting of lithium (bisoxalato) borate, lithium difluoro (oxalato) borate, lithium tetrafluoro (oxalato) phosphate, lithium oxalate, lithium (malonato oxalato) borate, lithium (salicylato oxalato) borate, and lithium (tris oxalato) phosphate,
(C) 0.01 up to less than 5 wt.-% based on the total weight of the electrolyte composition of at least one compound of general formula (IIa) or (IIb) 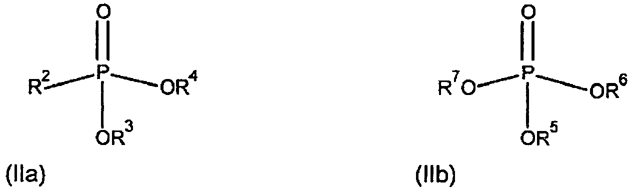 wherein
R² is selected from H, C₁-C₁₀ alkyl, C₃-C₁₀ cycloalkyl, benzyl and C₆-C₁₄ aryl wherein alkyl, cycloalkyl, benzyl and aryl may be substituted by one or more F, C₁-C₄ alkyl, phenyl, benzyl or C₁-C₄ alkyl substituted by one or more F, R³, R⁴, R⁵, R⁸ and R⁷ may be same or different and are independently from each other selected from C₁-C₁₀ alkyl, C₃-C₁₀ cycloalkyl, benzyl and C₆-C₁₄ aryl wherein alkyl, cycloalkyl, benzyl and aryl may be substituted by one or more F, C₁-C₄ alkyl, phenyl, benzyl or C₁-C₄ alkyl substituted by one or more F,
(D) at least one lithium salt different from compound (B), and
(E) optionally at least one further additive.

2. The lithium ion battery according to claim 1 having a cell voltage of more than 4.2 V against the anode when fully charged.

3. The lithium ion battery according to claim 1 or 2, wherein the cathode active material contains transition metal compounds having a content of Manganese of from 50 to 80 wt.-% based on the total weight of transition metal in the lithium ion containing transition metal compound.

4. The lithium ion battery according to any of claims 1 to 3, wherein the transition metal compounds are selected from manganese-containing spinels of the general formula (VI)
Li₁₊ₜM₂₋ₜO_{4-d} (VI)
wherein
d is 0 to 0.4,
t is 0 to 0.4, and
M is Mn and at least one further metal selected from the group consisting of Co and Ni; or
the transition metal compounds are selected from manganese-containing transition metal oxides with layer structure having the general formula (VII)
Li_{(1+y)}[NiₐCo_{b}Mn_{c}]_{(1-y)}O₂ (VII)
wherein
y is 0 to 0.3,
a, b and c may be same or different and are independently 0 to 0.8 with a + b + c = 1.

5. The lithium ion battery according to any of claims 1 to 4, wherein
the at least one aprotic organic solvent (A) is selected from
(a) cyclic and noncyciic organic carbonates,
(b) di-C₁-C₁₀-alkylethers,
(c) di-C₁-C₄-alkyl-C₂-C₆-alkylene ethers and polyethers,
(d) cyclic ethers,
(e) cyclic and acyclic acetals and ketals,
(f) orthocarboxylic acids esters, and
(g) cyclic and noncyclic esters of carboxylic acids.

6. The lithium ion battery according to any of claims 1 to 5, wherein the at least one compound (B) is selected from the group consisting of lithium (bisoxalato) borate, lithium difluoro (oxalato) borate, lithium tetrafluoro (oxalato) phosphate, lithium oxalate, lithium (malonato oxalato) borate, lithium (salicylato oxalato) borate, lithium (tris oxalato) phosphate.

7. The lithium ion battery according to any of claims 1 to 6, wherein the at least one compound (C) is selected from compounds of general formula (IIa) and (IIb) wherein
R² is selected from H, C₁-C₆ alkyl, benzyl and phenyl wherein alkyl, benzyl and phenyl may be substituted by one or more F, C₁-C₄ alkyl, phenyl, benzyl or C₁-C₄ alkyl substituted by one or more F,
R³, R⁴, R⁵, R⁶ and R⁷ may be same or different and are independently from each other selected from C₁-C₆ alkyl, benzyl and phenyl wherein alkyl, benzyl and phenyl may be substituted by one or more F, C₁-C₄ alkyl, phenyl, benzyl or C₁-C₄ alkyl substituted by one or more F.

8. The lithium ion battery according to any of claims 1 to 7, wherein the lithium salt (D) is selected from the group consisting of LiPF₆, LiPF₃(CF₂CF₃)₃, LiBF₄, LiClO₄, LiAsF₆, LiCF₃SO₃, LiN(SO₂F)₂, Li₂SiF₆, LiSbF₆, LiAlCl₄, and salts of the general formula
(CₙF₂ₙ₊₁SO₂)ₘXLi,
where m and n are defined as follows:
m = 1 when X is selected from oxygen and sulfur,
m = 2 when X is selected from nitrogen and phosphorus,
m = 3 when X is selected from carbon and silicon, and
n is an integer in the range from 1 to 20.

9. The lithium ion battery according to any of claims 1 to 8, wherein the further additive (E) is selected from the group consisting of 2-vinyl pyridine, 4-vinyl pyridine, cyclic exo-methylene carbonates, sultones, organic esters of inorganic acids, acyclic and cyclic alkanes having a boiling point at 1 bar of at least 36 °C, and aromatic compounds.

10. The lithium ion battery according to any of claims 1 to 9, wherein the electrolyte composition contains
from 0.15 to 3 wt.-% of at least one compound (B), and
from 0.15 to 3 wt.-% of at least one compound (C), based on the weight of the total composition.

11. The lithium ion battery according to any of claims 1 to 10, wherein the electrolyte composition contains
from 55 to 99.5 wt.-% of at least one aprotic organic solvent (A),
from 0.01 up to less than 5 wt.-% of at least one compound (B),
from 0.01 up to less than 5 wt.-% of at least one compound (C),
from 5 to 25 wt.-% of at least one lithium salt (D),
from 0 to 10 wt.-% of at least one further additive (E), and
from 0 to 50 ppm of water,
based on the weight of the total composition.

12. A lithium ion battery according to any of claims 1 to 11, wherein the anode contains Li ion intercalating carbon.

13. The use of at least one compound (B) selected from the group consisting of lithium (bisoxalato) borate, lithium difluoro (oxalato) borate, lithium tetrafluoro (oxalato) phosphate, lithium oxalate, lithium (malonato oxalato) borate, lithium (salicylato oxalato) borate, and lithium (tris oxalato) phosphate,
in combination with at least one compound (C) of general formula (IIa) or (IIb) 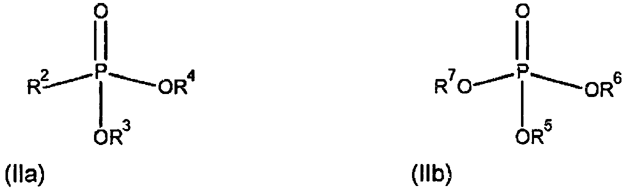 wherein
R² is selected from H, C₁-C₁₀ alkyl, C₃-C₁₀ cycloalkyl, benzyl and C₆-C₁₄ aryl wherein alkyl, cycloalkyl, benzyl and aryl may be substituted by one or more F, C₁-C₄ alkyl, phenyl, benzyl or C₁-C₄ alkyl substituted by one or more F,
R³, R⁴, R⁵, R⁶ and R⁷ may be same or different and are independently from each other selected from C₁-C₁₀ alkyl, C₃-C₁₀ cycloalkyl, benzyl and C₆-C₁₄ aryl wherein alkyl, cycloalkyl, benzyl and aryl may be substituted by one or more F, C₁-C₄ alkyl, phenyl, benzyl or C₁-C₄ alkyl substituted by one or more F,
as additives in electrolytes of lithium ion batteries comprising a cathode active material selected from lithium ion containing transition metal compounds having a content of Manganese of from 50 to 100 wt.-% based on the total weight of the transition metal in the lithium ion containing transition metal compound, wherein compound (B) is used in a concentration of 0.01 up to less than 5 wt.-% and compound (C) is used in a concentration of 0.01 up to less than 5 wt.-% based on the total weight of the electrolyte composition.

14. A process for manufacturing a lithium ion battery according to any of claims 1 to 12, comprising
(α) providing at least one aprotic organic solvent or a mixture of aprotic organic solvents (A),
(β) optionally adding one or more further additives (E) and mixing,
(γ) drying
(δ) adding the at least one compound (B), the at least one compound (C) and the at least one lithium salt (D) and mixing,
(ε) providing at least one anode and at least one cathode and assembling the lithium ion battery.

## Patentansprüche

1. Lithiumionenbatterie, umfassend
(i) mindestens eine Anode,
(ii) mindestens eine Kathode, die ein Kathodenaktivmaterial enthält, das aus Lithiumionen enthaltenden Übergangsmetallverbindungen mit einem Mangangehalt von 5 bis 100 Gew.-%, bezogen auf das Gesamtgewicht an Über-gangsmetall in der Lithiumionen enthaltenden Übergangsmetallverbindung, ausgewählt ist, und
(iii) mindestens eine Elektrolytzusammensetzung, enthaltend
(A) mindestens ein aprotisches organisches Lösungsmittel,
(B) 0,01 bis weniger als 5 Gew.-%, bezogen auf das Gesamtgewicht der Elektrolytzusammensetzung, mindestens einer Verbindung aus der Gruppe bestehend aus Lithium(bisoxalato)borat, Lithiumdifluoro(oxalato)borat, Lithiumtetrafluoro(oxalato)phosphat, Lithiumoxalat, Lithium(malonato-oxalato)borat, Lithium(salicylato-oxalato)borat und Lithium(trisoxalato)phosphat,
(C) 0,01 bis weniger als 5 Gew.-%, bezogen auf das Gesamtgewicht der Elektrolytzusammensetzung, mindestens einer Verbindung der allgemeinen Formel (IIa) oder (IIb) 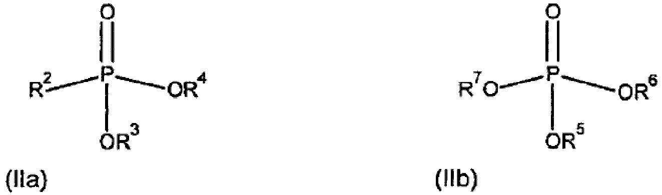 wobei
R² aus H, C₁-C₁₀-Alkyl, C₃-C₁₀-Cycloalkyl, Benzyl und C₆-C₁₄-Aryl ausgewählt ist, wobei Alkyl, Cycloalkyl, Benzyl und Aryl durch ein oder mehrere F, C₁-C₄-Alkyl, Phenyl, Benzyl oder C₁-C₄-Alkyl, das durch ein oder mehrere F substituiert ist, substituiert sein können, R³, R⁴, R⁵, R⁶ und R⁷ gleich oder verschieden sein können und unabhängig voneinander aus C₁-C₁₀-Alkyl, C₃-C₁₀-Cycloalkyl, Benzyl und C₆-C₁₄-Aryl ausgewählt sind, wobei Alkyl, Cycloalkyl, Benzyl und Aryl durch ein oder mehrere F, C₁-C₄-Alkyl, Phenyl, Benzyl oder C₁-C₄-Alkyl, das durch ein oder mehrere F substituiert ist, substituiert sein können,
(D) mindestens ein Lithiumsalz, das von Verbindung (B) verschieden ist, und
(E) gegebenenfalls mindestens ein weiteres Additiv.

2. Lithiumionenbatterie nach Anspruch 1 mit einer Zellspannung von mehr als 4,2 V gegen die Anode in vollständig geladenem Zustand.

3. Lithiumionenbatterie nach Anspruch 1 oder 2, wobei das Kathodenaktivmaterial Übergangsmetallverbindungen mit einem Mangangehalt von 50 bis 80 Gew.-%, bezogen auf das Gesamtgewicht an Übergangsmetall in der Lithiumionen enthaltenden Übergangsmetallverbindung, enthält.

4. Lithiumionenbatterie nach einem der Ansprüche 1 bis 3, wobei die Übergangsmetallverbindungen aus manganhaltigen Spinellen der allgemeinen Formel (VI)
Li₁₊ₜM₂₋ₜO_{4-d} (VI)
wobei
d für 0 bis 0,4 steht,
t für 0 bis 0,4 steht
und M für Mangan und mindestens ein weiteres Metall aus der Gruppe bestehend aus Co und Ni steht,
ausgewählt sind; oder
die Übergangsmetallverbindungen aus manganhaltigen Übergangsmetalloxiden mit Schichtstruktur der allgemeinen Formel (VII)
Li_{(1+y)}[NiₐCo_{b}Mn_{c}]_{(1-y)}O₂ (VII)
wobei
y für 0 bis 0,3 steht,
a, b und c gleich oder verschieden sein können und unabhängig für 0 bis 0,8 stehen, wobei a + b + c = 1,
ausgewählt sind.

5. Lithiumionenbatterie nach einem der Ansprüche 1 bis 4, wobei das mindestens eine aprotische organische Lösungsmittel (A) aus
(a) cyclischen und nicht-cyclischen organischen Carbonaten,
(b) Di-C₁-C₁₀-alkylethern,
(c) Di-C₁-C₄-alkyl-C₂-C₆-alkylenethern und Poly-ethern,
(d) cyclischen Ethern,
(e) cyclischen und acyclischen Acetalen und Ketalen,
(f) Orthocarbonsäureestern und
(g) cyclischen und nicht-cyclischen Estern von Carbonsäuren
ausgewählt ist.

6. Lithiumionenbatterie nach einem der Ansprüche 1 bis 5, wobei die mindestens eine Verbindung (B) aus der Gruppe bestehend aus Lithium(bisoxalato)-borat, Lithiumdifluoro(oxalato)borat, Lithium-tetrafluoro(oxalato)phosphat, Lithiumoxalat, Li-thium(malonato-oxalato)borat, Lithium(salicylato-oxalato)borat und Lithium(trisoxalato)phosphat ausgewählt ist.

7. Lithiumionenbatterie nach einem der Ansprüche 1 bis 6, wobei die mindestens eine Verbindung (C) aus Verbindungen der allgemeinen Formel (IIa) und (IIb) ausgewählt ist, wobei
R² aus H, C₁-C₆-Alkyl, Benzyl und Phenyl ausgewählt ist, wobei Alkyl, Benzyl und Phenyl durch ein oder mehrere F, C₁-C₄-Alkyl, Phenyl, Benzyl oder C₁-C₄-Alkyl, das durch ein oder mehrere F substituiert ist, substituiert sein können,
R³, R⁴, R⁵, R⁶ und R⁷ gleich oder verschieden sein können und unabhängig voneinander aus C₁-C₆-Alkyl, Benzyl und Phenyl ausgewählt sind, wobei Alkyl, Benzyl und Phenyl durch ein oder mehrere F, C₁-C₄-Alkyl, Phenyl, Benzyl oder C₁-C₄-Alkyl, das durch ein oder mehrere F substituiert ist, substituiert sein können.

8. Lithiumionenbatterie nach einem der Ansprüche 1 bis 7, wobei das Lithiumsalz (D) aus der Gruppe bestehend aus LiPF₆, LiPF₃(CF₂CF₃)₃, LiBF₄, LiClO₄, LiAsF₆, LiCF₃SO₃, LiN(SO₂F)₂, Li₂SiF₆, LiSbF₆, LiAlCl₄ und Salzen der allgemeinen Formel
(CₙF₂ₙ₊₁SO₂)ₘXLi,
wobei m und n folgendermaßen definiert sind:
m = 1, wenn X aus Sauerstoff und Schwefel ausgewählt ist,
m = 2, wenn X aus Stickstoff und Phosphor ausgewählt ist,
m = 3, wenn X aus Kohlenstoff und Silicium ausgewählt ist, und
n steht für eine ganze Zahl im Bereich von 1 bis 20,
ausgewählt ist.

9. Lithiumionenbatterie nach einem der Ansprüche 1 bis 8, wobei das weitere Additiv (E) aus der Gruppe bestehend aus 2-Vinylpyridin, 4-Vinylpyridin, cyclischen exo-Methylencarbonaten, Sultonen, organischen Estern anorganischer Säuren, acyclischen und cyclischen Alkanen mit einem Siedepunkt bei 1 bar von mindestens 36°C und aromatischen Verbindungen ausgewählt ist.

10. Lithiumionenbatterie nach einem der Ansprüche 1 bis 9, wobei die Elektrolytzusammensetzung
0,15 bis 3 Gew.-% mindestens einer Verbindung (B) und
0,15 bis 3 Gew.-% mindestens einer Verbindung (C), bezogen auf das Gewicht der gesamten Zusammensetzung,
enthält.

11. Lithiumionenbatterie nach einem der Ansprüche 1 bis 10, wobei die Elektrolytzusammensetzung
55 bis 99,5 Gew.-% mindestens eines aprotischen organischen Lösungsmittels (A),
0,01 bis weniger als 5 Gew.-% mindestens einer Verbindung (B),
0,01 bis weniger als 5 Gew.-% mindestens einer Verbindung (C),
5 bis 25 Gew.-% mindestens eines Lithiumsalzes (D),
0 bis 10 Gew.-% mindestens eines weiteren Additivs (E) und
0 bis 50 ppm Wasser,
bezogen auf das Gewicht der gesamten Zusammensetzung, enthält.

12. Lithiumionenbatterie nach einem der Ansprüche 1 bis 11, bei dem die Anode Li-Ionen interkalierenden Kohlenstoff umfasst.

13. Verwendung mindestens einer Verbindung (B) aus der Gruppe bestehend aus Lithium(bisoxalato)borat, Lithiumdifluoro(oxalato)borat, Lithiumtetrafluoro(oxalato)phosphat, Lithiumoxalat, Lithium(malonato-oxalato)borat, Lithium(salicylatooxalato)borat und Lithium(trisoxalato)phosphat in Kombination mit mindestens einer Verbindung (C) der allgemeinen Formel (IIa) oder (IIb) 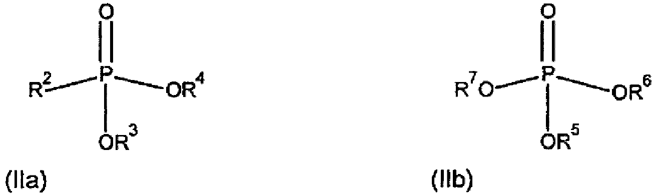 wobei
R² aus H, C₁-C₁₀-Alkyl, C₃-C₁₀-Cycloalkyl, Benzyl und C₆-C₁₄-Aryl ausgewählt ist, wobei Alkyl, Cycloalkyl, Benzyl und Aryl durch ein oder mehrere F, C₁-C₄-Alkyl, Phenyl, Benzyl oder C₁-C₄-Alkyl, das durch ein oder mehrere F substituiert ist, substituiert sein können,
R³, R⁴, R⁵, R⁶ und R⁷ gleich oder verschieden sein können und unabhängig voneinander aus C₁-C₁₀-Alkyl, C₃-C₁₀-Cycloalkyl, Benzyl und C₆-C₁₄-Aryl ausgewählt sind, wobei Alkyl, Cycloalkyl, Benzyl und Aryl durch ein oder mehrere F, C₁-C₄-Alkyl, Phenyl, Benzyl oder C₁-C₄-Alkyl, das durch ein oder mehrere F substituiert ist, substituiert sein können,
als Additive in Elektrolyten von Lithiumionenbatterien, die ein Kathodenaktivmaterial umfassen, das aus Lithiumionen enthaltenden Übergangsmetallverbindungen mit einem Mangangehalt von 5 bis 100 Gew.-%, bezogen auf das Gesamtgewicht an Übergangsmetall in der Lithiumionen enthaltenden Übergangsmetallverbindung, ausgewählt ist, wobei Verbindung (B) in einer Konzentration von 0,01 bis weniger als 5 Gew.-% und Verbindung (C) in einer Konzentration von 0,01 bis weniger als 5 Gew.-%, bezogen auf das Gesamtgewicht der Elektrolytzusammensetzung, verwendet wird.

14. Verfahren zur Herstellung einer Lithiumionenbatterie nach einem der Ansprüche 1 bis 12, umfassend:
(α) Bereitstellen mindestens eines aprotischen organischen Lösungsmittels oder einer Mischung von aprotischen organischen Lösungsmitteln (A),
(β) gegebenenfalls Zugeben eines oder mehrerer weiterer Additive (E) und Mischen,
(γ) Trocknen,
(δ) Zugeben der mindestens einen Verbindung (B), der mindestens einen Verbindung (C) und des mindestens einen Lithiumsalzes (D) und Mischen,
(ε) Bereitstellen mindestens einer Anode und mindestens einer Kathode und Zusammenbauen der Lithiumionenbatterie.

## Revendications

1. Batterie au lithium-ion comprenant
(i) au moins une anode,
(ii) au moins une cathode contenant un matériau actif de cathode choisi parmi les composés de métaux de transition contenant des ions lithium ayant une teneur en manganèse de 50 à 100 % en poids, rapporté au poids total de métal de transition dans le composé de métal de transition contenant des ions lithium, et
(iii) au moins une composition d'électrolyte contenant
(A) au moins un solvant organique aprotique,
(B) 0,01 à moins de 5 % en poids, rapporté au poids total de la composition d'électrolyte, d'au moins un composé choisi dans le groupe constitué par le (bisoxalato)borate de lithium, le difluoro(oxalato)borate de lithium, le tétrafluoro(oxalato)phosphate de lithium, l'oxalate de lithium, le (malonato-oxalato)borate de lithium, le (salicylato-oxalato)borate de lithium, et le (trisoxalato)phosphate de lithium,
(C) 0,01 à moins de 5 % en poids, rapporté au poids total de la composition d'électrolyte, d'au moins un composé de formule générale (IIa) ou (IIb) 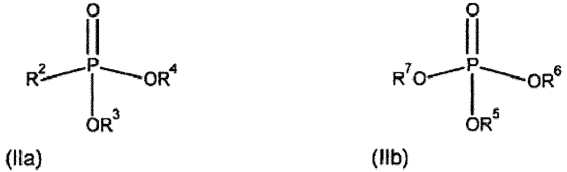 dans lesquelles
R² est choisi parmi H et les radicaux alkyle en C₁-C₁₀, cycloalkyle en C₃-C₁₀, benzyle et aryle en C₆-C₁₄, les radicaux alkyle, cycloalkyle, benzyle et aryle pouvant être substitués par un ou plusieurs F, radicaux alkyle en C₁-C₄, radicaux phényle, radicaux benzyle ou radicaux alkyle en C₁-C₄ substitués par un ou plusieurs F, R³, R⁴, R⁵, R⁶ et R⁷ peuvent être identiques ou différents et sont choisis indépendamment les uns des autres parmi les radicaux alkyle en C₁-C₁₀, cycloalkyle en C₃-C₁₀, benzyle et aryle en C₆-C₁₄, les radicaux alkyle, cycloalkyle, benzyle et aryle pouvant être substitués par un ou plusieurs F, radicaux alkyle en C₁-C₄, radicaux phényle, radicaux benzyle ou radicaux alkyle en C₁-C₄ substitués par un ou plusieurs F,
(D) au moins un sel de lithium différent du composé (B), et
(E) éventuellement au moins un autre additif.

2. Batterie au lithium-ion selon la revendication 1 ayant une tension de bain de plus de 4,2 V par rapport à l'anode lorsqu'elle est totalement chargée.

3. Batterie au lithium-ion selon la revendication 1 ou 2, dans laquelle le matériau actif de cathode contient des composés de métaux de transition ayant une teneur en manganèse de 50 à 80 % en poids, rapporté au poids total de métal de transition dans le composé de métal de transition contenant des ions lithium.

4. Batterie au lithium-ion selon l'une quelconque des revendications 1 à 3, dans laquelle les composés de métaux de transition sont choisis parmi les spinelles contenant du manganèse de la formule générale (VI)
Li₁₊ₜM₂₋ₜO_{4-d} (VI)
dans laquelle
d vaut 0 à 0,4,
t vaut 0 à 0,4, et
M représente Mn et au moins un autre métal choisi
dans le groupe constitué par Co et Ni ; ou
les composés de métaux de transition sont choisis parmi les oxydes de métaux de transition contenant du manganèse avec une structure stratifiée ayant la formule générale (VII)
Li_{(1+y)}[NiₐCo_{b}Mn_{c}]_{(1-y)}O₂ (VII)
dans laquelle
y vaut 0 à 0,3,
a, b et c peuvent être identiques ou différents et valent indépendamment 0 à 0,8 avec a + b + c = 1.

5. Batterie au lithium-ion selon l'une quelconque des revendications 1 à 4, dans laquelle l'au moins un solvant organique aprotique (A) est choisi parmi
(a) les carbonates organiques cycliques et acycliques,
(b) les éthers de dialkyle en C₁-C₁₀,
(c) les éthers et polyéthers de di-alkyl en C₁-C₄-alkylène en C₂-C₆,
(d) les éthers cycliques,
(e) les acétals et cétals cycliques et acycliques,
(f) les esters d'acides orthocarboxyliques, et
(g) les esters cycliques et acycliques d'acides carboxyliques.

6. Batterie au lithium-ion selon l'une quelconque des revendications 1 à 5, dans laquelle l'au moins un composé (B) est choisi dans le groupe constitué par le (bisoxalato)borate de lithium, le difluoro(oxalato)borate de lithium, le tétrafluoro(oxalato)phosphate de lithium, l'oxalate de lithium, le (malonato-oxalato)borate de lithium, le (salicylato-oxalato)borate de lithium, et le (trisoxalato)phosphate de lithium.

7. Batterie au lithium-ion selon l'une quelconque des revendications 1 à 6, dans laquelle l'au moins un composé (C) est choisi parmi les composés des formules générales (IIa) et (IIb) dans lesquelles
R² est choisi parmi H et les radicaux alkyle en C₁-C₆, benzyle et phényle, les radicaux alkyle, benzyle et phényle pouvant être substitués par un ou plusieurs F, radicaux alkyle en C₁-C₄, radicaux phényle, radicaux benzyle ou radicaux alkyle en C₁-C₄ substitués par un ou plusieurs F, R³, R⁴, R⁵, R⁶ et R⁷ peuvent être identiques ou différents et sont choisis indépendamment les uns des autres parmi les radicaux alkyle en C₁-C₆, benzyle et phényle, les radicaux alkyle, benzyle et phényle pouvant être substitués par un ou plusieurs F, radicaux alkyle en C₁-C₄, radicaux phényle, radicaux benzyle ou radicaux alkyle en C₁-C₄ substitués par un ou plusieurs F.

8. Batterie au lithium-ion selon l'une quelconque des revendications 1 à 7, dans laquelle le sel de lithium (D) est choisi dans le groupe constitué par LiPF₆, LiPF₃(CF₂CF₃)₃, LiBF₄, LiClO₄, LiAsF₆, LiCF₃SO₃, LiN(SO₂F)₂, Li₂SiF₆, LiSbF₆, LiAlCl₄, et les sels de formule générale
(CₙF₂ₙ₊₁SO₂)ₘXLi
où m et n sont définis comme suit :
m = 1 quand X est choisi entre l'oxygène et le soufre,
m = 2 quand X est choisi entre l'azote et le phosphore,
m = 3 quand X est choisi entre le carbone et le silicium, et
n est un entier dans la gamme de 1 à 20.

9. Batterie au lithium-ion selon l'une quelconque des revendications 1 à 8, dans laquelle l'autre additif (E) est choisi dans le groupe constitué par la 2-vinylpyridine, la 4-vinylpyridine, les carbonates d'exo-méthylène cycliques, les sultones, les esters organiques d'acides inorganiques, les alcanes acycliques et cycliques ayant un point d'ébullition à 1 bar d'au moins 36 °C, et les composés aromatiques.

10. Batterie au lithium-ion selon l'une quelconque des revendications 1 à 9, dans laquelle la composition d'électrolyte contient
de 0,15 à 3 % en poids d'au moins un composé (B), et de 0,15 à 3 % en poids d'au moins un composé (C), rapporté au poids de la composition totale.

11. Batterie au lithium-ion selon l'une quelconque des revendications 1 à 10, dans laquelle la composition d'électrolyte contient
de 55 à 99,5 % en poids d'au moins un solvant organique aprotique (A),
de 0,01 à moins de 5 % en poids d'au moins un composé (B),
de 0,01 à moins de 5 % en poids d'au moins un composé (C),
de 5 à 25 % en poids d'au moins un sel de lithium (D),
de 0 à 10 % en poids d'au moins un autre additif (E), et
de 0 à 50 ppm d'eau,
rapporté au poids de la composition totale.

12. Batterie au lithium-ion selon l'une quelconque des revendications 1 à 11, dans laquelle l'anode contient du carbone intercalant des ions Li.

13. Utilisation d'au moins un composé (B) choisi dans le groupe constitué par le (bisoxalato)borate de lithium, le difluoro(oxalato)borate de lithium, le tétrafluoro-(oxalato)phosphate de lithium, l'oxalate de lithium, le (malonato-oxalato)borate de lithium, le (salicylato-oxalato)borate de lithium, et le (trisoxalato)phosphate de lithium,
en combinaison avec au moins un composé (C) de formule générale (IIa) ou (IIb) 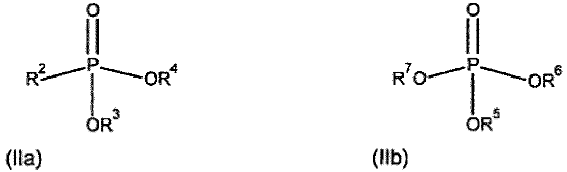 dans lesquelles
R² est choisi parmi H et les radicaux alkyle en C₁-C₁₀, cycloalkyle en C₃-C₁₀, benzyle et aryle en C₆-C₁₄, les radicaux alkyle, cycloalkyle, benzyle et aryle pouvant être substitués par un ou plusieurs F, radicaux alkyle en C₁-C₄, radicaux phényle, radicaux benzyle ou radicaux alkyle en C₁-C₄ substitués par un ou plusieurs F, R³, R⁴, R⁵, R⁶ et R⁷ peuvent être identiques ou différents et sont choisis indépendamment les uns des autres parmi les radicaux alkyle en C₁-C₁₀, cycloalkyle en C₃-C₁₀, benzyle et aryle en C₆-C₁₄, les radicaux alkyle, cycloalkyle, benzyle et aryle pouvant être substitués par un ou plusieurs F, radicaux alkyle en C₁-C₄, radicaux phényle, radicaux benzyle ou radicaux alkyle en C₁-C₄ substitués par un ou plusieurs F,
comme additifs dans des électrolytes de batteries au lithium-ion contenant un matériau actif de cathode choisi parmi les composés de métaux de transition contenant des ions lithium ayant une teneur en manganèse de 50 à 100 % en poids, rapporté au poids total du métal de transition dans le composé de métal de transition contenant des ions lithium, le composé (B) étant utilisé à une concentration de 0,01 à moins de 5 % en poids et le composé (C) étant utilisé à une concentration de 0,01 à moins de 5 % en poids, rapporté au poids total de la composition d'électrolyte.

14. Procédé de fabrication d'une batterie au lithium-ion selon l'une quelconque des revendications 1 à 12, comprenant les étapes suivantes :
(α) se procurer au moins un solvant organique aprotique ou un mélange de solvants organiques aprotiques (A),
(β) éventuellement, ajouter un ou plusieurs autres additifs (E) et mélanger,
(γ) sécher,
(δ) ajouter l'au moins un composé (B), l'au moins un composé (C) et l'au moins un sel de lithium (D) et mélanger,
(ε) se procurer au moins une anode et au moins une cathode et assembler la batterie au lithium-ion.
